Europäisches Patentamt

European Patent Office

Office européen des brevets

(19)

(11) Veröffentlichungsnummer: **0 210 516 B1**

# (12) EUROPÄISCHE PATENTSCHRIFT

(45) Veröffentlichungstag der Patentschrift: **20.03.91**

(51) Int. Cl.⁵: **A01C 7/12**

(21) Anmeldenummer: **86109594.1**

(22) Anmeldetag: **14.07.86**

(54) **Kombiniertes Normal- und Feinsärad für Sämaschinen.**

(30) Priorität: 02.08.85 DE 3527759
22.02.86 DE 3605768

(43) Veröffentlichungstag der Anmeldung:
**04.02.87 Patentblatt 87/06**

(45) Bekanntmachung des Hinweises auf die
Patenterteilung:
**20.03.91 Patentblatt 91/12**

(84) Benannte Vertragsstaaten:
**AT BE DE FR GB IT NL SE**

(56) Entgegenhaltungen:
**BE-A- 501 918**
**FR-A- 1 217 517**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Grosse-Scharmann, Franz, Dr.
Waldstrasse 35
W-2872 Hude i.O.(DE)**
Erfinder: **Gattermann, Bernd
Eichenwall 3
W-2872 Hude i.O.(DE)**
Erfinder: **Steenken, Bernhard
Waldhöfe 17
W-4475 Sögel 2(DE)**
Erfinder: **Müller, Horst
Karolinenhöhe 4
W-4504 Georgsmarienhütte(DE)**

## Beschreibung

Die Erfindung betrifft ein kombiniertes Normal- und Feinsärad für Sämaschinen entsprechend des Oberbegriffes des Anspruches 1.

Ein derartiges kombiniertes Normal- und Feinsärad für Sämaschine ist durch das deutsche Patent 837 022 bereits bekannt. Bei diesem bekannten Särad sind die Arretierungselemente für den Kupplungsstift sehr aufwendig ausgebildet. Vor allem ist die Montage der Arretierungselemente nur durch eine aufwendige und zeitraubende Handarbeit möglich. Das Normalsärad weist zur Aufnahme der Arretierungselemente eine radiale Bohrung auf. Diese radiale Bohrung kreuzt sich mit der Bohrung, die zur Aufnahme des Kupplungsstiftes dient. Für die Montage der Arretierungselemente wird zunächst der Kupplungsstift in die dafür vorgesehene Bohrung des Normalsärades gesteckt. Anschließend wird in die radiale Bohrung die Kugel der Arretierungselemente, die mit den Nuten des Kupplungsstiftes zusammenwirkt, gelegt. Dann wird in diese Bohrung die Feder der Arretierungselemente hineingelegt. Zum Schluß wird in diese Bohrung die Madenschraube hineingeschraubt, die die Arretierungselemente sichert. Diese aufwendige Ausbildung und Montage der Arretierungselemente ist absolut nicht zufriedenstellend.

Der Erfindung liegt nun die Aufgabe zugrunde, die Arretierungselemente und die Herstellung sowie die Montage der Säräder entscheidend zu vereinfachen.

Diese Aufgabe wird erfindungsgemäß durch das Kennzeichen des Anspruches 1 gelöst. Infolge dieser Maßnahme wird ein sehr einfaches Arretierungselement geschaffen, welches nur noch aus einem einzigen Teil besteht, so daß überhaupt keine Montagearbeiten mehr für das Einsetzen der Arretierungselemente in das Normalsärad erforderlich ist. In einfachster Weise werden diese Arretierungselemente gleich bei der Herstellung der Normalsäräder mit in das Normalsärad integriert. In einfachster Weise ist diese möglich, wenn das Normalsärad auf Kunststoff hergestellt ist, denn dann können die Arretierungselemente gleich mit angespritzt werden. Das elastisch ausgebildete Arretierungselement und das Abstützelement gewährleisten jederzeit mit Sicherheit eine genaue Arretierung des Kupplungsstiftes. Somit ist die langfristige und dauerhafte Funktionsweise der Arretierungselemente und somit eine genaue Arretierung des Kupplungsstiftes jederzeit gewährleistet.

In einer Ausführungsform ist erfindungsgemäß vorgesehen, daß nur ein elastisch ausgebildetes Arretierungselement vorgesehen ist, wobei das Abstützelement zwischen dem Nabenteil und dem äußeren Teil des Normalsärades angeordnet ist, und sich das Arretierungselement an dem Abstützelement abstützt Hierbei wird das Abstützelement von zwei Kreissegmenten gebildet und ist elastisch bzw. federnd ausgebildet. Infolge dieser Maßnahmen besteht das Arretierungselement nur noch aus einem elastischen Teil, wobei das von zwei Kreissegmenten gebildete Abstützelement derart ausgebildet ist, daß auch eine langandauernde Verformung nicht zu einer plastischen Verformung führt und stets eine Arretierung des Kupplungsstiftes gewährleistet. Dadurch, daß das Normal- und Feinsärad jeweils aus Kunststoff hergestellt ist, ist das Abstützelement und das Arretierungselement auf einfachste Weise einstückig mit dem Normalsärad ausgebildet, da es sich um ein angespritztes Bauteil handelt.

Bei dieser erfindungsgemäßen Ausführungsform ist vorgesehen, daß die Bohrung bzw. der Kupplungsstift einen U-förmigen Querschnitt aufweisen, wobéi die dem kreisförmigen Teil der Bohrung bzw. des Kupplungsstiftes gegenüberliegende Seite als ebene Fläche ausgebildet ist, in deren Bereich die als Arretierungselement ausgebildete, nockenförmige Nase angeordnet ist. Auf diese Weise wird eine besonders günstige Aufnahme des Kupplungsstiftes erreicht. Die Berührungsfläche zwischen dem Arretierungselement und dem Kupplungsstift wird so in besonders vorteilhafter Weise vergrößert, wodurch ein sicheres Arretieren des Kupplungsstiftes erreicht wird. Hierbei kann der Kupplungsstift beispielsweise auch aus Kunststoff hergestellt sein.

In einer besonders bevorzugten Ausführungsform ist erfindungsgemäß vorgesehen, daß zwischen dem Feinsärad und dem Normalsärad ein in radialer Richtung wirksames elastisches Element angeordnet ist Hierbei ist dieses elastische Element jeweils als Federscheibe ausgebildet und einstückig mit einem der beiden Säräder, vorzugsweise mit dem Normalsärad gekoppelt und ein auf die Nabe des Feinsärades wirkendes federndes Element. Infolge dieser Maßnahmen werden sowohl das Feinsärad als auch das Normalsärad in vorteilhafter Weise gegen die Sägehäusewände gedrückt. Hierdurch kann es gegenüber den bisherigen Dosierorganen nicht zu unerwünschten Ablagerungen von Beizmittel und Staub in den Ritzen zwischen diesen Bauteilen der Säorgane kommen, noch können ganz kleine Saatgüter unkontrolliert das Sägehäuse verlassen.

Weitere Einzelheiten der Erfindung sind den übrigen Unteransprüchen, der Beispielsbeschreibung und den Zeichnungen zu entnehmen. Hierbei zeigen

Fig. 1     das erfindungsgemäß ausgebildete kombinierte Normal- und Feinsärad ohne Kupplungsstift im Schnitt,

Fig. 2     das Normalsärad gemäß Fig. 1 in der Seitenansicht,

Fig. 3  das erfindungsgemäß ausgebildete kombinierte Normal- und Feinsärad mit Kupplungsstift gemäß Fig. 1 im Schnitt,

Fig. 4  den Kupplungsstift gemäß Fig. 3 in der Seitenansicht,

Fig. 5  den Kupplungsstift gemäß Fig. 4 in der Vorderansicht und

Fig. 6  die als elatisches Element ausgebildete Federscheibe gemäß Fig. 3.

Das kombinierte Normal- und Feinsärad 1 ist auf der Säwelle 2 innerhalb des Sägehäuses 3 angeordnet. Das kombinierte Särad 1 besteht aus dem Normalsärad 4 und dem Feinsärad 5, welches sich nebeneinander in dem Sägehäuse 3 befindet. Das Feinsärad 5 weist die angespritzte Anlagefläche 6 auf, in der die sich in radialer Richtung erstreckende Bohrung 7 befindet. Mit Hilfe einer Madenschraube, die in die Bohrung 7 des Feinsärades 5 eingeschraubt wird, wird das Feinsärad 5 auf der Säwelle 2 festgesetzt. Das Normalsärad 4 weist die in axialer Richtung weisende Bohrung 8 auf, die einen U-förmigen Querschnitt besitzt. Diese Bohrung 8 weist zwei unterschiedliche Durchmesser auf, wodurch die Kante 9 innerhalb der Bohrung 8 entsteht. Die dem kreisförmigen Teil 10 der Bohrung 8 gegenüberliegende Seite 11 ist als ebene Fläche 12 ausgebildet, in deren Bereich das elastische Arretierungselement 13 angeordnet ist. Das Arretierungselement 13 ist mit einer nockenförmigen Nase 14 ausgestattet und stützt sich über ein zwischen dem Normalsärad 4 und dem Arretierungselement 13 angeordnetes Abstützelement 15 ab. Dieses Abstützelement 15 ist elastisch ausgebildet und besteht aus zwei Kreissegmenten 16, die zwischen dem Nabenteil 17 und dem äußeren Teil 18 des Normalsärades 4 angeordnet sind und daß Arretierungselement 13 abstützen. Zwischen dem Normalsärad 4 und dem Feinsärad 5 ist ein in axialer Richtung wirksames elastisches, als Federscheibe 19 ausgebildetes Element angeordnet. Diese Federscheibe 19 ist an den vier Lagerstellen 20 des Normalsärades 4 gelagert und wirkt auf die Nahe 21 des Feinsärades 5, so daß die beiden Säräder 4 und 5 in entgegengesetzter Richtung gegen die jeweiligen Sägehäusewände 22 gedrückt werden.

In der Bohrung 8 des Normalsärades 4 ist der aus Kunststoff hergestellte, U-förmige Kupplungsstift 23 verschiebbar angeordnet. Dieser Kupplungsstift 23 weist auf seiner ebenen Fläche 24 im Bereich des kleineren Querschnittes 25 die beiden Nuten 26 und 27 auf. Mit diesen beiden Nuten 26 und 27 wirkt die nockenförmige Nase 14 des Arretierungselementes 13 zusammen. Durch die eigenelastische Ausbildung des Arretierungselementes 13 wird die nockenförmige Nase 14 gegen den Kupplungsstift 23 und somit bei entsprechender Stellung des Kupplungsstiftes 23 in die Nuten 26 und 27 gedrückt.

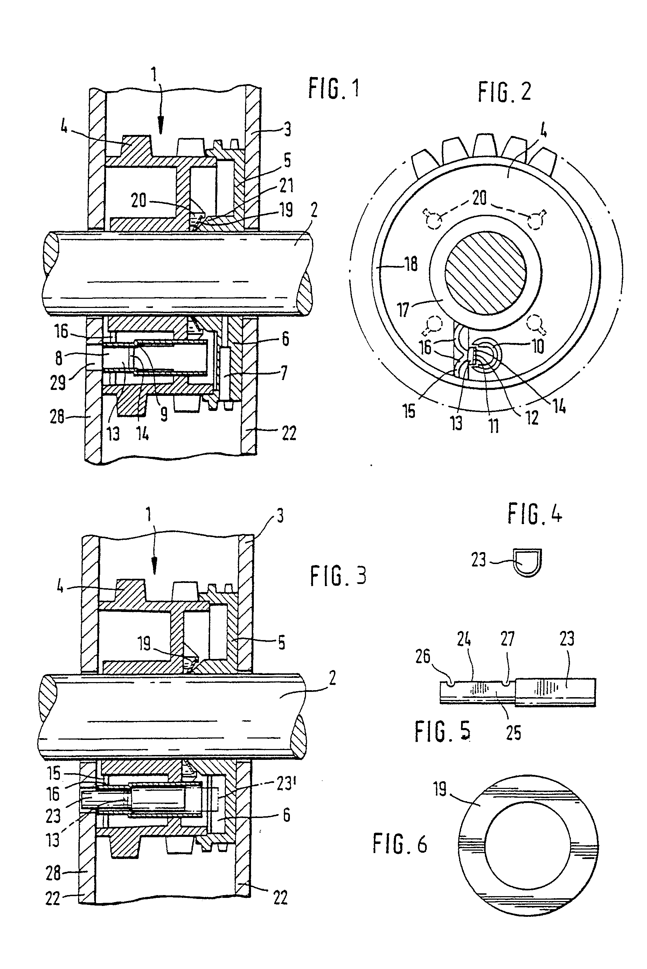

Infolge dieser Anordnung kann der Kupplungsstift 23 in zwei Betriebsstellungen geschaltet werden. Bei der in Fig. 6 wiedergegebenen Betriebsstellung greift der Kupplungsstift 23 mit seinem linken äußeren Teil in die in der linken Seitenwand 28 des Sägehäuses 3 angeordneten Bohrung 29 ein. In dieser Betriebsstellung wird über die Säwelle 2 nur das Feinsärad 5 angetrieben, mit dem dann insbesondere Feinsämereien gefördert werden.

In der anderen, mit durchbrochenen Linien wiedergegebenen Betriebsstellung 23' ist der Kupplungsstift 23 aus der Bohrung 29 herausgedrückt. Der Kupplungsstift 23 reicht hier soweit in den Bereich des Feinsärades 5, daß er an der Anlagefläche 6 des Feinsärades 5 zur Anlage kommt. In dieser Betriebsstellung 23' werden sowohl das Feinsärad 5 als auch das Normalsärad 4 über die Säwelle 2 angetrieben und fördern das Saatgut gemeinsam.

Durch die unterschiedlichen Durchmesser der Bohrung 8 sowie der unterschiedlichen Querschnitt des Kupplungsstiftes 23 ist es nicht möglich, den Kupplungsstift 23 ganz aus der Bohrung 8 herauszudrücken, da er mit dem größeren Teil seines Querschnittes an der Kante 9 der Bohrung 8 anliegt. Somit ist es also nicht möglich, den Kupplungsstift 23 ganz aus der Bohrung 8 herauszutreiben.

**Ansprüche**

1.  Kombiniertes Normal- und Feinsärad für eine Sämaschine, wobei ein Feinsärad (5) mittels einer formschlüssigen und klemmartigen Verbindung mit der Säwelle (2) verbindbar ist und neben dem Normalsärad (4) als getrennte Teile nebeneinander in einem Sägehäuse (3) auf einer gemeinsamen Säwelle (2) lagert sind, wobei das Feinsärad (5) mit dem Normalsärad (4) mit Hilfe eines durch Arretierungselemente (13) in zumindest zwei Betriebsstellungen arretierbaren Kupplungsstiftes verbindbar ist und das Feinsärad (5) sowie das Normalsärad (4) außer ihrer Mittelbohrung jeweils eine weitere Bohrung aufweisen, in der der Kupplungsstift angeordnet ist, dadurch gekennzeichnet, daß die Arretierungselemente (13) einstückig mit dem Normalsärad (4) ausgebildet sind, daß das jeweilige Arretierungselement (13) elastisch ausgebildet ist und sich über ein zwischen dem Normalsärad (4) und ihm angeordnetes Abstützelement (15) abstützt, daß sich das Abstützelement (15) zwischen dem Nabenteil (17) und dem äußeren Teil (18) befindet und aus zwei Kreissegmenten (16) gebildet ist, daß das Arretierungselement (13) zwischen Nabenteil (17) und äußeren Teil angeordnet ist, wobei jeweils die einen Enden der beiden Kreissegmente (16) des Abstützelementes (15) in das Arretierungselement (13) einmünden und die jeweils anderen Enden der Kreissegmente (16) einerseites in das Nabenteil (17) und andererseits in das äußere Teil (18) einmünden.

2. Särad nach Anspruch 1, dadurch gekennzeichnet, daß nur ein elastisch ausgebildetes Arretierungselement (13) vorgesehen ist.

3. Särad nach Anspruch 1, dadurch gekennzeichnet, daß die Bohrung (8) bzw. der Kupplungsstift (23) einen U-förmigen Querschnitt aufweisen.

4. Särad nach Anspruch 3, dadurch gekennzeichnet, daß die dem kreisförmigen Teil (10) der Bohrung (8) bzw. des Kupplungsstiftes (23) gegenüberliegende Seite (11) als ebene Fläche (12) ausgebildet ist, in deren Bereich die Arretierungselemente (13) angeordnet sind.

5. Särad nach Anspruch 1, dadurch gekennzeichnet, daß das Abstützelement (15) elastisch und/oder federnd ausgebildet ist.

6. Särad nach Anspruch 1, dadurch gekennzeichnet, daß das Abstützelement (15) und das Arretierungselement (13) einstückig mit dem Normalsärad (4) ausgebildet ist.

7. Särad nach Anspruch 1, dadurch gekennzeichnet, daß zwischen dem Normalsärad (4) und dem Feinsärad (5) in axialer Richtung wirksame elastische Elemente angeordnet sind.

8. Särad nach Anspruch 7, dadurch gekennzeichnet, daß dieses elastische Element jeweils eine Federscheibe (19) ist.

9. Särad nach Anspruch 7, dadurch gekennzeichnet, daß dieses elastische Element einstückig mit einem der beiden Säräder (4,5) vorzugsweise mit dem Normalsärad (4) gekoppelt und ein auf die Narbe (21) des Feinsärades (5) wirkendes federndes Element ist.

## Claims

1. Combined normal and fine seed wheel for a seed drill, wherein one fine seed wheel (5) is connectable to the seed shaft (2) by means of a form-locking and clamp-like connection and, together with the normal seed wheel (4), such wheels are mounted as separate component parts adjacent each other in a seed housing (3) on a common seed shaft (2), wherein the fine seed wheel (5) is connectable to the normal seed wheel (4) by means of a coupling pin, which is lockable in at least two operational positions by locking means (13), and the fine seed wheel (5) as well as the normal seed wheel (4) each have, in addition to their central bore, an additional bore in which the coupling pin is disposed, characterised in that the locking means (13) are one piece with the normal seed wheel (4), in that each locking means (13) is a resilient structure and is supported by a supporting means (15) disposed between itself and the normal seed wheel (4), in that the supporting means (15) is situated between the hub member (17) and an external portion (18) and is formed from two circular segments (16), in that the locking means (13) is disposed between hub member (17) and the external portion, wherein one end of each of the two circular segments (16) of the supporting means (15) extends into the locking means (13) and the other ends of the circular segments (16) extend, on the one hand, into the hub member (17) and, on the other hand, into the external portion (18).

2. Seed wheel according to claim 1, characterised in that only one resilient locking means (13) is provided.

3. Seed wheel according to claim 1, characterised in that the bore (8) and the coupling pin (23) each have a U-shaped cross-section.

4. Seed wheel according to claim 3, characterised in that the side (11) opposite the circular portion (10) of the bore (8), or respectively of the coupling pin (23), is in the form of a flat surface (12), in the region of which the locking means (13) are disposed.

5. Seed wheel according to claim 1, characterised in that the supporting means (15) is resilient (elastic) and/or flexible.

6. Seed wheel according to claim 1, characterised in that the supporting means (15) and the locking means (13) are formed integrally with the normal seed wheel (4).

7. Seed wheel according to claim 1, characterised in that resilient means, which are active in the axial direction, are disposed between the normal seed wheel (4) and the fine seed wheel (5).

8. Seed wheel according to claim 7, characterised in that each of these resilient means is a spring washer disc (19).

9. Seed wheel according to claim 7, characterised in that this resilient means is integrally connected to one of the two seed wheels (4, 5), preferably the normal seed wheel (4), and is a flexible means which acts upon the hub (21) of the fine seed wheel (5).

## Revendications

1. Roue combinée à semences normales et à semences fines pour semoir, une roue à semences fines (5) pouvant être reliée par une liaison par la forme et une liaison à pincement avec l'axe (2) du semoir et à côté de celle-ci une roue à semences normales (4) constituée comme pièce distincte étant logée avec l'autre dans un boîtier de semoir (3) sur un axe commun (2), la roue à semences fines (5) pouvant être reliée à la roue à semences normales (4) à l'aide d'un goujon d'embrayage qui se bloque par un élément de blocage (13) dans au moins deux positions de fonctionnement et en ce que la roue à semences fines (5) ainsi que la roue à semences normales (4) comportent en plus de leur perçage médian, chaque fois un autre perçage dans lequel se trouve le goujon d'embrayage, roue caractérisée en ce que les éléments de blocage (13) sont réalisés en une seule pièce avec la roue à semences normales (4), l'élément de blocage (13), respectif étant élastique, s'appuie entre la roue à semences normales (4) et l'élément d'appui (15) qui lui est associé, cet élément d'appui (15) prévu entre la partie de moyeu (17) et la partie extérieure (18) étant formé de deux segments de cercle (16), l'élément de blocage (13) étant prévu entre la partie de moyeu (17) et la partie extérieure, et chaque fois une extrémité des deux segments de cercle (16) de l'élément d'appui (15) débouche dans l'élément de blocage (13) et l'autre extrémité respective des segments de cercle (16) débouche d'une part dans la partie de moyeu (17) et d'autre part dans la partie extérieure (18).

2. Roue pour semoir selon la revendication 1, caractérisée par un seul élément de blocage élastique (13).

3. Roue pour semoir selon la revendication 1, caractérisé en ce que le perçage (8) ou le goujon d'embrayage (23) présentent une section en forme de U.

4. Roue pour semoir selon la revendication 3, caractérisée en ce que la partie (11) opposée à la partie en arc de cercle (10) du perçage (8) ou du goujon d'embrayage (23) est une surface plane (12) au niveau de laquelle se trouvent les éléments de blocage (13).

5. Roue pour semoir selon la revendication 1, caractérisée en ce que l'élément d'appui (15) est élastique et/ou à ressort.

6. Roue pour semoir selon la revendication 1, caractérisée en ce que l'élément d'appui (15) et l'élément de blocage (13) font corps avec la roue à semences normales (4).

7. Roue pour semoir selon la revendication 1, caractérisée par un élément élastique agissant dans la direction axiale, entre la roue à semences normales (4) et la roue à semences fines (5).

8. Roue pour semoir selon la revendication 7, caractérisée en ce que l'élément élastique est respectivement un disque à ressort (19).

9. Roue à semoir selon la revendication 7, caractérisée en ce que cet élément élastique fait corps avec l'une des deux roues pour semoir (4, 5) en étant de préférence couplé à la roue à semences normales (4) et constitue un élément à ressort agissant sur le moyeu (21) de la roue à semences fines (5).

FIG. 1

FIG. 2

FIG. 3

FIG. 4

FIG. 5

FIG. 6